# EUROPÄISCHE PATENTSCHRIFT

(11) **EP 0 851 954 B1**
(45) Veröffentlichungstag und Bekanntmachung des Hinweises auf die Patenterteilung: **29.12.1999**
(21) Anmeldenummer: 96941575.1
(22) Anmeldetag: 20.09.1996
(51) Int. Cl.: E01F 9/016, E01F 9/018

(54) **STANDGERÄT, INSBESONDERE BELEUCHTBARES STANDGERÄT FÜR FLUGHÄFEN**
STAND DEVICE, IN PARTICULAR ILLUMINATED STAND DEVICE FOR AIRPORTS
DISPOSITIF SUR PIEDS, NOTAMMENT DISPOSITIF SUR PIEDS POUVANT ETRE ECLAIRE POUR AEROPORTS

(30) Priorität: 20.09.1995 DE 29515089 U
(43) Veröffentlichungstag der Anmeldung: 08.07.1998
(73) Patentinhaber: SIEMENS AKTIENGESELLSCHAFT, 80333 München (DE)
(72) Erfinder: WILLEMS, Louis, B-3400 Landen (BE)
(86) Internationale Anmeldenummer: DE9601789
(87) Internationale Veröffentlichungsnummer: WO9711230

(56) Entgegenhaltungen:
- GB-A- 2 193 521
- US-A- 3 851 615

## Beschreibung

Die Erfindung betrifft ein Standgerät für Flughäfen, das z.B. rohrförmige, Beine aufweist, die mit auf dem Boden befestigten Füßen verbunden sind, wobei zwischen den Beinen und den Füßen eine lösbare Sicherheitseinrichtung angeordnet und als Sollbruchstelle wirkend ausgebildet ist, die einen Flansch und einen Gegenflansch mit Außenseiten aufweist, die durch eine Schraubschelle miteinander verbunden sind.

Standgeräte, insbesondere beleuchtbare Standgeräte für Flughäfen, wie Rollführungs- und Standplatzanzeigeeinrichtungen, aber auch über Flur angeordnete Lichter, müssen Sicherheitskupplungen aufweisen, die bei Kollisionen o.ä., aber auch bei Hurrikans ein problemloses Sichumlegen der Geräte ermöglichen. Im Flughafenbereich bekannte, als Sollbruchstellen für die Beine dieser Standgeräte ausgebildete Sicherheitseinrichtungen weisen z.B. Brechhülsen aus Aluminiumguß auf. Diese Brechhülsen sind in die Füße der Standgeräte eingeschraubt und müssen jeweils, nachdem sie in Funktion getreten sind, aus den Füßen herausgeschraubt und ersetzt werden. Dies ist sowohl zeit- als auch kostenaufwendig.

Aus der US-PS 3,851,615 ist weiterhin ein seitlich an der Straße aufzustellender Reflektorträger bekannt, der am Fuß ein wie eine Sollbruchstelle wirkendes Kugelgelenk mit einer Befestigungsschelle aufweist. Die Schelle ist zylindrisch ausgebildet und wirkt mit dem geschlitzten Oberteil des Kugelgelenks zusammen als Klemmkupplung am Fuß des Reflektorträgers. Das Kugelgelenk ist zwar arretierbar, aber bezüglich seiner Kraftaufnahme nicht exakt einstellbar. Aus der GB 2 143 521 A ist weiterhin ein Straßenpfosten bekannt, der durch Schrauben über einen Flansch mit einem Fuß verbunden werden kann. Der Flansch und die Schrauben bilden keine Sollbruchstelle.

Es ist Aufgabe der Erfindung, ein Standgerät anzugeben, bei dem ein Sichumlegen des Gerätes bei Überschreiten einer Sollstandfestigkeit bei Kollisionen, Hurrikans o.ä. ohne Zerstörung eines relativ teuren und u.U. aufwendig zu montierenden bzw. zu demontierenden Teils möglich ist.

Die Aufgabe wird dadurch gelöst, daß die Schraubschelle ein zylindrisches Mittelteil und zumindest auf Teilen des Umfangs an die jeweiligen Flanschaußenseiten anlegbare Flanken aufweist. So ergibt sich eine kostengünstige und insbesondere leicht und einfach montierbare und demontierbare Sicherheitseinrichtung für ein Standgerät mit konstruktiv bedingter Sollstandkraft, die so erhöhten Sicherheitsanforderungen Rechnung tragen kann.

In weiterer Ausgestaltung der Erfindung ist vorgesehen, daß die Schraubschelle als Blechschelle ausgebildet ist, die die Flanschaußenteile, insbesondere formschlüssig, umfaßt. So ergibt sich eine einfache, sehr kostengünstig herstellbare Sicherheitseinrichtung, die mit einem Schraubendreher montierbar und demontierbar ist.

Eine besonders günstige, sichere Funktion der Blechschelle ergibt sich, wenn die Flanschaußenseiten einen Neigungswinkel α zwischen 15° und 45°, insbesondere von 22,5°, aufweisen. Eine gute Anpassung an die maximal aufzunehmenden Kräfte, bei deren Überschreiten die Sicherheitseinrichtung auslöst, ist durch Ausnehmungen in den Flanken der Schelle erreichbar. In der Regel ist es ausreichend, wenn die Schelle zwei Ausnehmungen, nämlich an der Verschraubungsstelle und gegenüber, aufweist.

Die Erfindung wird anhand von Zeichnungen näher erläutert, aus denen weitere, auch erfindungswesentliche, Einzelheiten entnehmbar sind. Im einzelnen zeigen:
- FIG 1: eine erfindungsgemäße Sicherheitseinrichtung im Schnitt,
- FIG 2: eine Schraubschelle, die als Blechschelle ausgebildet ist und
- FIG 3: eine Brechkupplung nach dem Stand der Flughafen-Technik.

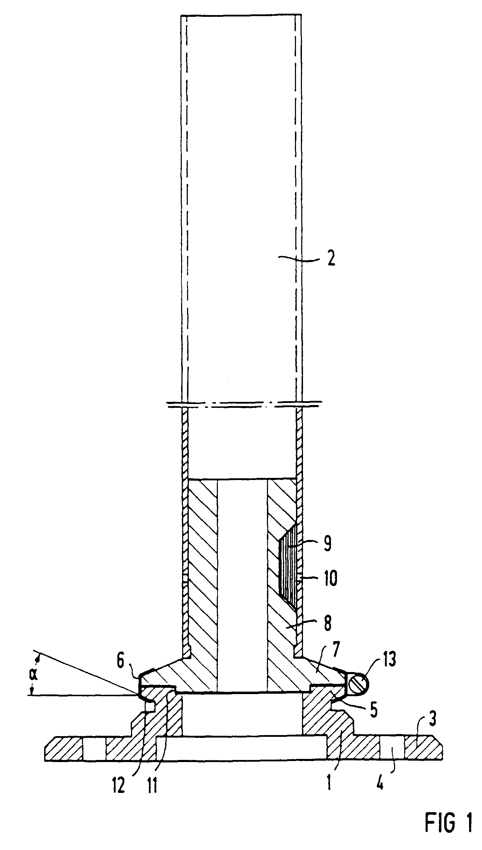

In FIG 1 bezeichnet 1 den Fuß eines Standgeräts. 2 bezeichnet ein Bein, das einen eingeschobenen Rohrstutzen 8 aufweist. An dem Fuß 1 mit einem tellerartigen Teil 3 und Befestigungslöchern 4 für Schrauben, befindet sich ein Flansch 5, der mit dem Flansch 7 an dem Rohrstutzen 8 das Flanschpaar bildet, das von der Schelle 6 mit definierter Kraft zusammengehalten wird. Die Schelle 6 wird durch die Schraube 13 zusammengezogen.

Die beiden Flanschen 5 und 7 weisen vorteilhaft äußere Schrägen 12 auf, die z.B. unter einem Winkel α von 22,5° verlaufen. An diese Schrägen schmiegen sich erfindungsgemäß die Flanken der Schelle 6 an. Innen weisen die beiden Flanschen 7 und 5 eine Zentrierung 11 auf, die einige Millimeter lang ist und einen sicheren Schutz gegen eine Verschiebung der beiden Flanschen zueinander bietet. In dem Bein 2 befindet sich noch ein Schraubenloch 10, durch das eine nicht gezeigte Schraube in die Ausnehmung 9 eingedreht werden kann, um den Rohrstutzen 8 gegenüber dem Rohr 2 zu sichern.

Wie aus der Zeichnung vom Fachmann ersichtlich, ergibt eine an dem Bein 2 angreifende Querkraft ein Moment in der Berührungsfläche der Flanschen, das bei Überschreiten einer vorgegebenen Größe zum erfindungsgemäßen Aufspringen der Schelle 6 führt. Dann kann sich das Bein 2 in eine waagerechte Lage umlegen, ohne daß seine Einzelteile oder Teile des Fußes beschädigt werden. Zum Verbinden der Flansche nach Wiederaufstellung des Geräts braucht lediglich eine neue Schelle 6 angebracht und festgeschraubt werden. Dies kann vorteilhafterweise auch von einer ungeübten Hilfskraft durchgeführt werden, da eine Ausrichtung des Beins in vertikaler Richtung durch entsprechende Maßnahmen bei der Aufstellung des Geräts erfolgt ist und der Fuß bei einem Ansprechen der Sicherheitseinrichtung nicht bewegt, beschädigt oder sonstwie beeinflußt wird.

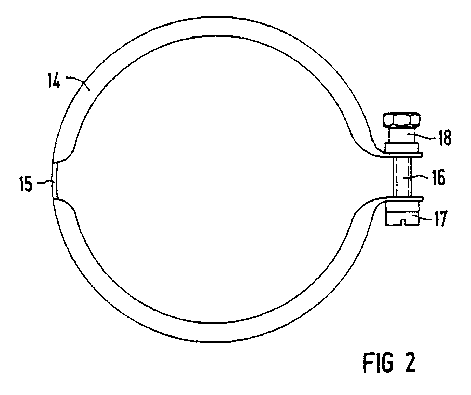

In FIG 2 bezeichnet 14 eine erfindungsgemäße Blechschelle mit einer Befestigungsschraube 16 zwischen stegartigen Schraubenaufnehmungen 17, von denen eine die Gewindehülse 18 aufweist. Vorteilhaft auf der der Schraube 16 gegenüberliegenden Seite der Schelle 14 befindet sich an der Stelle 15 eine Ausnehmung in den Flanken der Schelle 14. Die Größe dieser Ausnehmung oder bei Bedarf auch weiterer Ausnehmungen, erlauben eine genaue Einstellung der Ansprechkraft (Sollstandfestigkeit) für die Sicherheitseinrichtung.

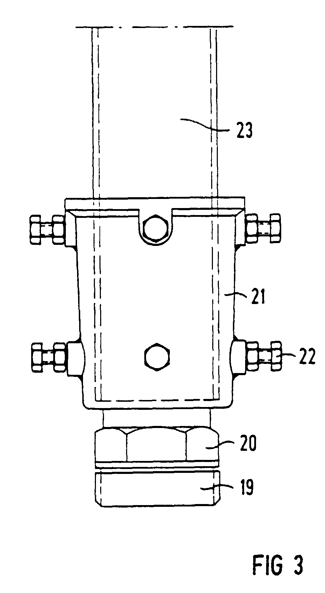

In FIG 3, die den Stand der Technik zeigt, bezeichnet 19 einen Gewindestutzen mit einem Sechskant 20. Das Gewinde des Gewindestutzens 19 wird in ein entsprechendes Gegengewinde in einem Fuß eingedreht, der über Befestigungslöcher und Schrauben mit dem Untergrund verbunden ist. Oberhalb des Sechskants 20 befindet sich eine Brechhülse 21 mit Ausricht- und Arretierungsschrauben 22 für ein Gerätebein 23. Wenn eine große Querkraft auf das Gerätebein 23 einwirkt, bricht die in leichtem Aluminiumguß ausgebildete Brechhülse 21. Anschließend ist sie zerstört und muß komplett ausgewechselt werden. Dabei muß ein erneutes Ausrichten des Gerätebeins erfolgen. Bei dem Auswechseln der Brechhülse 21 ist besonders nachteilig, daß diese häufig, nach eventuell jahrelangem Einsatz, in dem Gewinde des Fußes festkorrodiert ist. Dann ist entweder eine erhebliche Kraftanstrengung nötig, oder es muß sogar der Fuß gewechselt werden. Durch die erfindungsgemäße Sicherheitseinrichtung ist derartiges ausgeschlossen. Dies ist ein erheblicher, weiterer Vorteil. Auch nach jahrelangem Einsatz ist das Wiederaufrichten des Geräts nach einem Ansprechen der Sicherheitseinrichtung durch ein einfaches Anlegen einer neuen Schelle möglich.

## Patentansprüche

1. Standgerät für Flughäfen, das z.B. rohrförmige, Beine aufweist, die mit auf dem Boden befestigten Füßen verbunden sind, wobei zwischen den Beinen und den Füßen eine lösbare Sicherheitseinrichtung angeordnet und als Sollbruchstelle wirkend ausgebildet ist, die einen Flansch und einen Gegenflansch mit Außenseiten aufweist, die durch eine Schraubschelle miteinander verbunden sind, **dadurch gekennzeichnet**, daß die Schraubschelle (6) ein zylindrisches Mittelteil und zumindest auf Teilen des Umfangs an die jeweiligen Flanschaußenseiten anlegbare Flanken (14) aufweist.

2. Standgerät nach Anspruch 1, **d a d u r c h g ekennzeichnet**, daß die Schraubschelle (6) als Blechschelle ausgebildet ist, die die Außenseiten von Flansch (7) und des Gegenflansches (5) formschlüssig umfaßt.

3. Standgerät nach Anspruch 1 oder 2, **dadurch gekennzeichnet**, daß die Flanschaußenseiten einen Neigungswinkel α von 15° bis 45°, insbesondere von 22,5° aufweisen.

## Claims

1. Stand device for airports, which has, for example, tubular legs which are connected to feet which are fastened to the floor, wherein arranged between the legs and the feet and constructed so as to act as a break-off point is a detachable safety device, which has a flange and a mating flange having outside surfaces which are connected to each other by a screw clip, characterised in that the screw clip (6) has a cylindrical centre portion and, at least on portions of the circumference, edges (14) which can be placed on the respective flange outside surfaces.

2. Stand device according to claim 1, characterised in that the screw clip (6) is constructed as a sheet-metal clip which surrounds in a form-locking manner the outside surfaces (7) of the flange and the mating flange (5).

3. Stand device according to claim 1 or 2, characterised in that the flange outside surfaces have an angle of inclination α of 15° to 45°, in particular 22.5°

## Revendications

1. Dispositif sur pieds pour aéroports, qui comporte des jambes, par exemple tubulaires, qui sont assemblées à des pieds fixés sur le sol, un dispositif de sécurité amovible étant disposé entre les jambes et les pieds, étant conçu pour agir comme point de rupture privilégiée et comportant une bride et une contre-bride à faces extérieures, qui sont mutuellement assemblées par un collier vissé, **caractérisé** en ce que le collier (6) vissé comporte une partie médiane cylindrique et des flancs (14) qui peuvent être appliqués au moins sur des parties de la circonférence sur les faces extérieures respectives des brides.

2. Dispositif sur pieds suivant la revendication 1, **caractérisé** en ce que le collier (6) vissé est réalisé sous forme de collier en tôle, qui enserre en engagement positif les faces extérieures de la bride (7) et de la contre-bride (5).

3. Dispositif sur pieds suivant la revendication 1 ou 2, **caractérisé** en ce que les faces extérieures des brides possèdent un angle α d'inclinaison de 15° à 45°, notamment de 22,5°.
